# EUROPEAN PATENT SPECIFICATION

(11) **EP 4 468 487 B1**
(45) Date of publication and mention of the grant of the patent: **13.05.2026**
(21) Application number: 23883069.9
(22) Date of filing: 24.10.2023
(51) Int. Cl.: H01M 50/293, H01M 50/291, H01M 50/24, H01M 50/229, H01M 50/367, H01M 50/249

(54) **BATTERY PACK, MANUFACTURING METHOD OF BATTERY PACK, AND VEHICLE**
BATTERIEPACK, BATTERIEPACKHERSTELLUNGSVERFAHREN UND FAHRZEUG
BLOC-BATTERIE, PROCÉDÉ DE FABRICATION DE BLOC-BATTERIE ET VÉHICULE

(30) Priority: 25.10.2022 KR 20220138104
(43) Date of publication of application: 27.11.2024
(73) Proprietor: LG Energy Solution, Ltd., Seoul 07335 (KR)
(72) Inventor: KIM, Gae-Sung, Daejeon 34122 (KR); PARK, Tae-Young, Daejeon 34122 (KR); CHOI, Bum, Daejeon 34122 (KR)
(74) Representative: Plasseraud IP
(86) International application number: PCT/KR2023/016581
(87) International publication number: WO 2024/090963

(56) References cited:
- CN-A- 103 872 276
- CN-A- 115 020 901
- KR-A- 20180 064 485
- KR-A- 20180 064 485
- KR-A- 20190 127 135
- KR-A- 20200 115 431
- KR-A- 20210 067 700
- KR-A- 20220 026 638
- KR-A- 20220 115 532
- KR-A- 20220 115 532

## Description

### TECHNICAL FIELD

The present disclosure relates to a battery pack, and particularly, to a battery pack, a manufacturing method of a battery pack, and a vehicle. The present application claims priority to Korean Patent Application No. 10-2022-0138104 filed on October 25, 2022 in the Republic of Korea.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.5 V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module including at least one battery cell first, and then configure a battery pack by using such at least one battery module and adding other components. Therefore, a conventional battery pack includes a plurality of battery cells, a module case accommodating battery cells in module units, and a pack case accommodating all of them.

In such a conventional battery pack, for example, when looking at a battery pack including cylindrical battery cells, there is a gap between battery cells accommodated in the module case, and a frame for fixing the battery cells exists in the module case. The gap between the battery cells is filled with the ribs of the frame or left as an empty space, and a plurality of battery modules combined with the battery cells and the frame are assembled to form a battery pack.

However, in the case of a conventional battery pack, when a cylindrical battery cell is ignited, there is a possibility of chain ignition due to the ignition of vent portion and side rupture of adjacent battery cells. In addition, since a module case is required in addition to the battery pack case and there are many individual frames within each battery module, there is a problem in that the weight of the battery pack increases and space efficiency within the battery pack decreases. That is, there is a problem that even a battery pack of the same size contains fewer battery cells.

Therefore, it is required to find a way to provide a battery pack that reduces the possibility of chain ignition and improves the degradation issue of space efficiency, and a vehicle including the same.

KR 2018 0064485 A discloses an electric energy storage module and manufacturing method thereof. CN 103 872 276 A discloses a lithium ion battery filled polymer composition, filing method, lithium battery and application. KR 2022 0115532 A discloses a battery module, battery pack, and vehicle comprising the battery module.

### DISCLOSURE

### Technical Problem

The present disclosure is directed to providing a battery pack that reduces the possibility of chain ignition and the degradation of space efficiency by preventing side rupture of the battery cell and securing structural rigidity within the battery module.

The present disclosure is also directed to providing a method for manufacturing such a battery pack.

The present disclosure is still also directed to providing a vehicle including such a battery pack.

### Technical Solution

A battery pack of the present disclosure layer is laid out in appended claim 1.

The inorganic layer has flame retardancy compared to the resin layer.

The battery cell is a cylindrical battery cell, the battery cells are accommodated upright in the pack case, and the resin layer and the inorganic layer may surround the side surface of the battery cells.

The inorganic filler has a low density compared to the base resin.

The inorganic filler may be a hollow glass bead.

It is preferable that the initial viscosity of the base resin is 1000 mPas (cP) or less.

The content of the inorganic filler in the composition may be 10% or more.

The base resin may have a Shore hardness A of 80 or more and a Shore hardness D of 30 or more after curing.

It is preferable that the base resin has an initial curing time of 30 minutes or more.

The battery pack may further include an adhesive between the inner surface of the pack case and the lower end portion of the battery cell.

The battery cell includes a vent portion at the top or bottom thereof, and the inorganic layer may surround the vent portion.

In a preferred example, the pack case includes a bottom frame or pack tray accommodating the lower end portion of the battery cell.

And, the pack case may further include a cover frame covering the upper end portion of the battery cell.

In another preferred example, the pack case includes a base case supporting the battery cell assembly; and a cross beam provided on both sides of the base case and coupled to the upper end portion of the battery cell assembly.

The battery pack may further include an adhesive filled to a predetermined height on the inner surface of the base case.

A manufacturing method of a battery pack according to the present disclosure for achieving the above other object includes the following steps of: accommodating a plurality of battery cells in a pack case; filling the space between the plurality of battery cells with a composition including a base resin and an inorganic filler; and forming a resin layer filling a relatively lower portion of the space between the plurality of battery cells and an inorganic layer filling a relatively upper portion of the space between the plurality of battery cells by curing the composition, and by forced phase separation of the base resin and the inorganic filler according to the density difference during curing.

A vehicle of the present disclosure for achieving the above still other object includes at least one battery pack according to the present disclosure.

### Advantageous Effects

According to the present disclosure, it is possible to prevent side rupture of the battery cell and secure structural rigidity within the battery module.

According to the present disclosure, the module case can be omitted by filling the space between the battery cells with a resin layer, while forming a relatively lower portion of the space between the battery cells as a resin layer and a relatively upper portion of the space between the battery cells as an inorganic layer by a method of forced phase separation during curing a composition including a base resin and an inorganic filler. The inorganic layer may secure flame retardancy, thereby reducing the possibility of chain ignition.

According to the present disclosure, it is possible to provide a battery pack that reduces the possibility of chain ignition and the degradation of space efficiency, and a vehicle including the same.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a conceptual view of a battery pack according to an embodiment of the present disclosure.
FIG. 2 is a view for describing phase separation.
FIG. 3 is a view for describing a battery pack according to another embodiment of the present disclosure.
FIG. 4 is a view for describing a battery cell included in the battery pack of FIG. 3.
FIG. 5 is a view for describing a mechanism for ensuring safety when an abnormal situation occurs in the battery pack of FIG. 3.
FIG. 6 is a view for describing a battery pack according to another embodiment of the present disclosure.
FIG. 7 is a view for describing a battery cell assembly of the battery pack of FIG. 6.
FIG. 8 is a view for describing the pack case of FIG. 6.
FIG. 9 is a view for describing a vehicle according to an embodiment of the present disclosure.
FIG. 10a is a photograph of the state after curing of Comparative Example 1, and FIG. 10b is a photograph of the flame retardancy test of Comparative Example 1.
FIG. 11a is a photograph of the state after curing of Comparative Example 2, and FIG. 11b is a photograph of the flame retardancy test of Comparative Example 2.
FIG. 12a is a photograph of the state after curing of the Example, and FIG. 12b is a photograph of the flame retardancy test of the Example.

### DETAILED DESCRIPTION

The present disclosure will become more apparent by describing preferred embodiments of the present disclosure in detail with reference to the accompanying drawings. The embodiments described herein are shown by way of example to help understanding of the present disclosure, and it should be understood that the present disclosure may be variously modified and implemented differently from the embodiments described herein. In addition, to help understanding of the present disclosure, the accompanying drawings are not illustrated on an actual scale, but the dimensions of some components may be exaggerated. In the drawings, the same reference numerals refer to the same components.

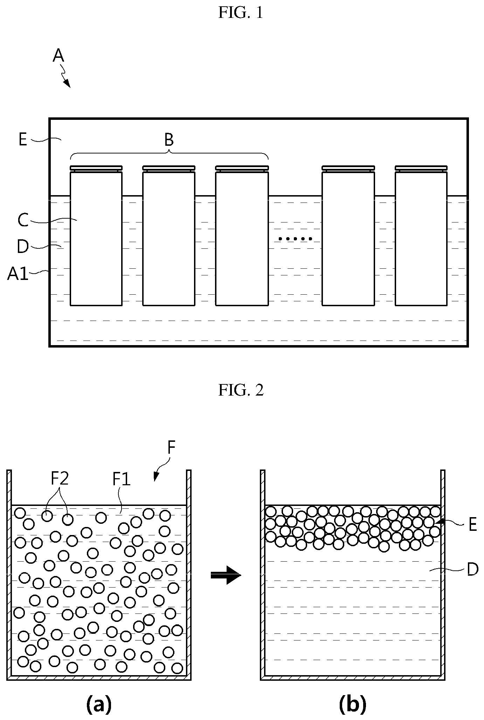

FIG. 1 is a conceptual view of a battery pack according to an embodiment of the present disclosure.

Referring to FIG. 1, a battery pack A may be composed of one or more battery modules B, and the battery module B may be composed of a plurality of battery cells C again.

In this embodiment, the types or structures of the battery pack A, the battery module B, and the battery cell C are not particularly limited. The battery pack A of this embodiment may include battery packs of various types or structures as long as they have a predetermined standardized structure or shape and are coupled to the lower portion of a vehicle. Meanwhile, in this embodiment, the term "battery pack" is used for convenience of description, but it does not necessarily refer to a battery pack only in a typical sense. For example, the battery pack A of this embodiment may include technical concepts such as battery cell to pack or battery cell to chassis. That is, in this embodiment, the term of battery pack A may be interpreted to broadly include an energy storage means having a predetermined standardized structure or shape and coupled to a vehicle to supply power to a driving means.

The battery pack A includes a pack case A1. The battery module B is accommodated inside the pack case A1. The pack case A1 may be configured in various ways, as shown in other embodiments to be described later.

The battery module B may be a concept of a battery cell assembly in which a plurality of battery cells C are electrically connected in series and/or in parallel. Alternatively, it may be a concept that the battery cell module assembly includes other electrical components such as a BMS. Conventional battery modules included a module case made of metal and a frame for holding and fixing battery cells so as to have mechanical rigidity by accommodating the battery cells. Unlike the prior art, in the battery module B included in the battery pack A of this embodiment, module cases and frames may be omitted or minimized.

There is a space between the plurality of battery cells C accommodated in the pack case A1 depending on the shape or storage method of the battery cells C. In this embodiment, a resin layer D is included in a relatively lower portion of the space between the battery cells C. Preferably, the resin layer D fills the relatively lower portion of the space between the battery cells C, so that there is no empty space between the battery cell C and the resin layer D. An inorganic layer E is included in a relatively upper portion of the space between the battery cells C. Preferably, the inorganic layer E fills the relatively upper portion of the space between the battery cells C, so that there is no empty space between the battery cell C and the inorganic layer E.

The resin layer D may be formed from the bottom of the pack case A1. The resin layer D may surround the bottom surface and side surface of the battery cell C. As another example, the resin layer D may be formed from the lower end of the battery cell C. The resin layer D may surround the side surface of the battery cell C except for the bottom surface thereof. The resin layer D may serve to support the battery cell C and particularly to mechanically protect the side surface of the battery cell C in place of the module case and frame of conventional battery modules. It is possible to prevent side rupture of the battery cell C.

For example, the battery cell C may be a cylindrical battery cell. The battery cells C may be accommodated upright in the pack case A1. The resin layer D and the inorganic layer E may surround the side surface of the battery cells C to mechanically support them.

The inorganic layer E may be formed above the resin layer D. The inorganic layer E may surround the top surface and side surface of the battery cell C. As another example, the inorganic layer E may surround only the side surface of the battery cell C. The inorganic layer E may be formed to be full to the top surface of the pack case A1. The resin layer D may surround the side surface of the battery cell C except for the bottom surface thereof. The resin layer D may serve to support the battery cell C and particularly to mechanically protect the side surface of the battery cell C in place of the module case and frame of conventional battery modules. The inorganic layer E may have flame retardancy compared to the resin layer D. The inorganic layer E may ensure the flame retardancy of the battery pack A compared to the case where the inside of the battery pack A is entirely filled with a resin layer.

The concept of relative varies depending on the criteria. In this embodiment, the bottom surface of the pack case A1 is used as a reference. That is, the relatively lower portion refers to the side closer to the bottom of the pack case A1. The resin layer D and the inorganic layer E are formed between the plurality of battery cells C in a height direction along the upper side perpendicular to the bottom surface of the pack case A1. The space between the battery cells C in the height direction may be filled with the resin layer D and the inorganic layer E without any gaps. There is a discontinuity between the materials filling the space between the battery cells C in the height direction. Along the height direction, the resin layer D is included on one side and the inorganic layer E is included on the other side.

A plurality of battery cells C may first be accommodated in the pack case A1, and then the resin layer D and the inorganic layer E may be formed in the space between the battery cells C. In such a case, as shown in FIG. 1, the resin layer D may be formed on the side closer to the bottom surface of the pack case A1, and the inorganic layer E may be formed on the top of the resin layer D in the height direction.

As another example, the plurality of battery cells C may be accommodated in the pack case A1 after first forming a resin layer D and an inorganic layer E outside the pack case A1 in the space therebetween. In this case, positions of the resin layer D and the inorganic layer E in the height direction may vary depending on the direction in which the plurality of battery cells C are accommodated in the pack case A1. For example, when accommodated in the pack case A1 with the side on which the resin layer D is formed as the bottom, the resin layer D may be located on the side close to the bottom surface of the pack case A1 and the inorganic layer E may be located above the resin layer D in the height direction, as shown in FIG 1. Conversely, when accommodated in the pack case A1 with the side on which the inorganic layer E is formed as the bottom, the inorganic layer E is located on the side close to the bottom surface of the pack case A1 and the resin layer D is located above the inorganic layer E in the height direction.

In particular, the resin layer D and the inorganic layer E are a double layer formed by forced phase separation as the composition including the base resin and the inorganic filler is cured. This has the advantage that the process of forming the resin layer D and the process of forming the inorganic layer E do not have to be performed separately. In addition, since the inorganic filler is included, it is possible to not only lower the weight of the battery pack A but also use the relatively expensive base resin less, thereby having the advantage of contributing to a reduction in manufacturing costs.

By using forced phase separation of the composition, the inorganic layer E may be located at a portion where flame retardancy is more required in the height direction. For example, when a vent portion is formed at the upper end of the battery cell C, the inorganic layer E may be formed to be located at the upper end portion of the battery cell C so as to surround the vent portion. Conversely, when a vent portion is formed at the lower end of the battery cell C, the inorganic layer E may be formed to be located at the lower end portion of the battery cell C so as to surround the vent portion. The inorganic layer E may be formed on the lower end of the battery cell C by using forced phase separation of the composition while the lower end of the battery cell C is disposed facing upward. The inorganic layer E may more effectively block heat transfer to the surrounding area when an abnormal situation occurs in the battery cell C.

The resin layer D may be formed with a thickness of 1/2 or less based on the height of the battery cell C, and the inorganic layer E may be formed with a thickness of 1/2 or more. As another example, the resin layer D may be formed with a thickness of 2/3 or less based on the height of the battery cell C, and the inorganic layer E may be formed with a thickness of 1/3 or more. As still another example, the resin layer D may be formed with a thickness of 4/5 or less based on the height of the battery cell C, and the inorganic layer E may be formed with a thickness of 1/5 or more. As the thickness of the resin layer D is greater than the thickness of the inorganic layer E based on the height of the battery cell C, it is advantageous in terms of securing mechanical rigidity. It is preferable that the thickness of the inorganic layer E is set to be smaller than the thickness of the resin layer D, but equal to or greater than the minimum thickness capable of exhibiting the effect of flame retardancy.

The base resin preferably has a Shore hardness A of 80 or more and a Shore hardness D of 30 or more after curing. It is well known that Shore hardness A is a means of measuring and indicating the hardness of soft rubber and Shore hardness D is a means of measuring and indicating the hardness of hard rubber. Shore hardness A and Shore hardness D have values between 0 and 100. The Shore hardness A of 80 or more and the Shore hardness D of 30 or more fall into the categories of hard and extra hard on the well-known Shore hardness scale. For example, tires, shoe heels, and cart wheels fall into the category of hard, and safety helmets fall into the category of extra hard. If the base resin having a Shore hardness A of 80 or more and a Shore hardness D of 30 or more after curing is utilized, the rigidity of the resin layer D can be secured to sufficiently support the battery cell C mechanically, and the mechanical rigidity of the battery pack A can be secured even without a module case or frame.

Examples of the base resin include epoxy, urethane, and the like, and epoxy may be preferable for the purpose of securing rigidity.

Since epoxy and urethane are not flame retardant, additional fire retardancy is required. When epoxy or urethane was used as a potting material previously in the battery pack field, there were some examples of adding phosphorus-based flame retardants or flame retardant fillers to be dispersed evenly. However, these phosphorus-based flame retardants or flame retardant fillers have the risk of increase in price and weight.

The inorganic filler is preferably hollow glass beads. Hollow glass beads have a lower density and are flame retardant compared to phosphorus-based flame retardants or flame retardant fillers. They are beneficial for weight reduction and are inexpensive.

In the present disclosure, curing is not performed in a state where the inorganic filler is evenly dispersed in the base resin, but performed by collecting the base resin on one side and the inorganic filler on the other side using forced phase separation of the mixture due to the density difference.

FIG. 2 is a view for describing phase separation in more detail.

FIG. 2 (a) shows a state of the composition F including the base resin F1 and the inorganic filler F2 before curing. When the composition F is prepared by mixing the base resin F1 and the inorganic filler F2, the inorganic filler F2 is evenly dispersed in the base resin F1 before curing.

FIG. 2 (b) shows a state in which the inorganic filler F2 with a lower density due to the density difference is collected at the relatively upper portion and the base resin F1 is mainly located at the lower portion.

The composition F including the base resin F1 and the inorganic filler F2 undergoes phase separation due to density difference over time. The inorganic filler F2 with a lower density is collected at the relatively upper portion to form the upper layer, and the base resin F1 is collected at the relatively lower portion to form the lower layer. When curing in this state, a resin layer D is formed from the base resin F1 collected at the relatively lower portion, and an inorganic layer E is formed from the inorganic filler F2 collected at the relatively upper portion. Curing may be thermal curing, UV curing, or natural curing depending on the properties of the base resin.

In this way, after the base resin F1 is completely cured, an inorganic layer E mainly including the inorganic filler F2 is formed on the relatively upper portion. A resin layer D mainly including the base resin F1 is formed on the relatively lower portion.

The battery pack A according to the present disclosure may be manufactured by using this phase separation.

The manufacturing method of the battery pack A may be performed as follows.

First, a plurality of battery cells C are accommodated in the pack case A1. A composition F including a base resin F1 and an inorganic filler F2 is filled in the space between the plurality of battery cells C.

The composition F is cured, and the base resin F1 and the inorganic filler F2 may be forcibly phase-separated according to the density difference during curing as described in FIG. 2, thereby forming a resin layer D filling the relatively lower portion of the space between the plurality of battery cells C and an inorganic layer E filling the relatively upper portion of the space between the plurality of battery cells C.

If the inorganic filler F2 is evenly dispersed in the base resin F1 and cured as it is, the content of the inorganic filler F2 should be high to secure the desired level of flame retardancy. As the content of the inorganic filler F2 is increased, the content of the base resin F1 should be decreased, which is not preferable in terms of securing rigidity.

In the present disclosure, the inorganic filler F2 having flame retardancy is collected on one side to form an inorganic layer E, and the flame retardancy of the portion where the inorganic layer E is located may be particularly secured. There is an effect of securing the desired level of flame retardancy even with a smaller amount of inorganic filler F2 compared to the case of curing in a state where the inorganic filler F2 is evenly dispersed in the base resin F1.

In order to manufacture the battery pack A, it is necessary to select the initial viscosity and initial curing time of the base resin F1 that allows easy phase separation. And, the content of the inorganic filler F2 (which determines the thickness of the inorganic layer) capable of securing flame retardancy should be determined.

Preferably, the initial viscosity of the base resin F1 is 1000 mPas (cP) or less. The initial viscosity is the viscosity before gelation begins. If the initial viscosity is greater than 1000 mPas (cP), even if a low-density inorganic filler F2 is used, it is difficult for the inorganic filler F2 to move above the base resin F1, which makes it difficult to cause complete phase separation, and it is more likely that the inorganic filler F2 will be cured evenly dispersed in the base resin F1. If the initial viscosity is too low, curing may take a long time or the hardness of the resin layer D may not be sufficient. The initial viscosity of the base resin F1 is determined by considering these points. The initial viscosity of the base resin F1 may be adjusted by the type of the base resin F1, the molecular weight of the base resin F1, an additive such as a viscosity modifier, or the like.

Preferably, the base resin F1 has an initial curing time of 30 minutes or more. The initial curing time is the time until gelation begins. During the initial curing time, the inorganic filler F2 moves upward, and the phase separation occurs sufficiently. If the initial curing time is too short, the phase separation may not occur completely. If the initial curing time is too long, the overall process time becomes longer, which is not favorable from a productivity perspective. The initial curing time of the base resin F1 is determined by considering these points. The initial curing time of the base resin F1 may be adjusted by the type of the base resin F1, the molecular weight of the base resin F1, an additive such as a curing agent that assists gelation, or the like.

The content of the inorganic filler F2 in the composition F may be 10% or more. This content is expressed as a percentage of the volume ratio of the inorganic filler F2 to the total volume of the composition F. The 10% content may be the minimum content capable of securing flame retardancy. The higher the content of the inorganic filler F2, the better the flame retardancy and the less the content of base resin F1, which is advantageous in terms of price. However, if the content of the inorganic filler F2 is too high, complete phase separation may be impaired and it may be disadvantageous in terms of securing mechanical rigidity. The content of the inorganic filler F2 is determined by considering these points.

According to the above description, the space between the battery cells C in the battery pack A may be filled with a resin layer D having hard physical properties to secure structural rigidity. The resin layer D may replace a frame or module case having ribs. Therefore, it is advantageous to reduce the weight of the battery pack A, and the space efficiency within the battery pack A is not deteriorated. That is, even a battery pack of the same size may contain more battery cells than the prior art to increase energy density.

By using forced phase separation of the composition F in which the inorganic filler F2 is mixed with the base resin F1 capable of forming the resin layer D, the resin layer D and the inorganic layer E may be formed in the same process step. The inorganic layer E is formed by forced phase separation of the composition F and secures flame retardancy. The inorganic layer E complements the flame retardancy of the resin layer D.

As mentioned earlier, the pack case A1 may be implemented in various ways. This will be described in detail in the following embodiments.

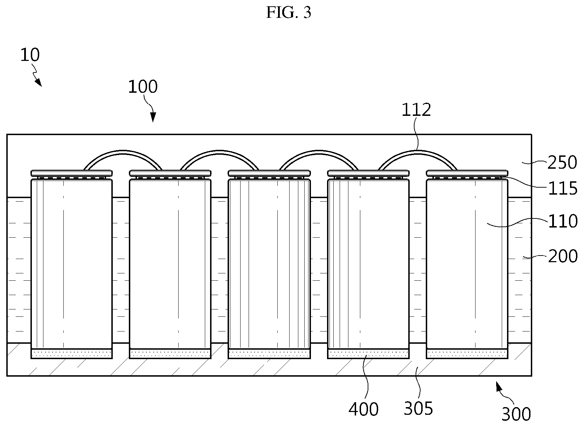

FIG. 3 is a view for describing a battery pack according to another embodiment of the present disclosure.

Referring to FIG. 3, a battery pack 10 may include a battery cell assembly 100, a resin layer 200, an inorganic layer 250, a pack case 300, and an adhesive 400.

The battery cell assembly 100 may include a plurality of battery cells 110.

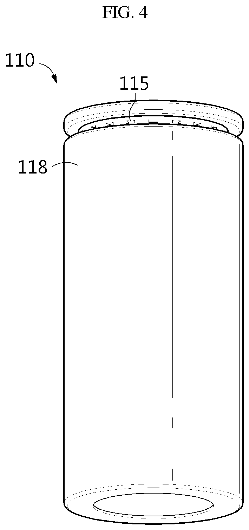

FIG. 4 is a view for describing a battery cell included in the battery pack of FIG. 3.

The battery cells 110, as secondary batteries, may be provided in a cylindrical type, a pouch type, or a prismatic type. Hereinafter, this embodiment is limited to describing the battery cells 110 as cylindrical battery cells.

A vent portion 115 for discharging gas or flame may be provided at the top of each battery cell 110. This vent portion 115 may be formed at the top of the battery cell 110 to have a small thickness compared to the surrounding area. This is to discharge the gas or flame more easily out of the battery cell 110 by being broken when an abnormal situation occurs in the battery cell 110 and the internal pressure increases above a certain level.

The vent portion 115 may also be provided in the shape of an opening or a notch having a predetermined size. In addition, the vent portion 115 may also be formed in a structure of adding a film that is broken at a pressure above a certain level to the opening having a predetermined size.

An insulating tube 118 may be provided on the outer peripheral surface of each battery cell 110. The insulating tube 118 is for insulating the battery cells 110 and may cover the outer peripheral surface of the battery cells 110. Accordingly, the insulating tube 118 may be provided in plurality corresponding to the number of battery cells 110. This insulating tube 118 may be provided as a shrink tube.

The battery cells 110 may be connected, for example, by bonding wires 112 or the like.

As shown in FIG. 3, the battery cell assembly 100 is accommodated in the pack case 300. The resin layer 200 may be filled between the plurality of battery cells 110 of the battery cell assembly 100. Since this resin layer 200 may be the same as the resin layer D of the above-described embodiment, redundant description is not to be given. The resin layer 200 fills a relatively lower portion of the space between the plurality of battery cells 110. The resin layer 200 may secure structural rigidity. There is no need to use a frame or module case having ribs. Therefore, it is advantageous to reduce the weight of the battery pack 10, and the space efficiency within the battery pack 10 is not deteriorated.

The inorganic layer 250 may also be filled between the plurality of battery cells 110 of the battery cell assembly 100. Since this inorganic layer 250 may be the same as the inorganic layer E of the above-described embodiment, redundant description is not to be given. The inorganic layer 250 fills a relatively upper portion of the space between the plurality of battery cells 110. The inorganic layer 250 surrounds the vent portion 115. The inorganic layer 250 has a thickness formed below the vent portion 115 based on the height of the battery cell 110. The inorganic layer 250 has flame retardancy, so it may respond to flame ejection from the vent portion 115.

The pack case 300 may accommodate the battery cell assembly 100, the resin layer 200, and the inorganic layer 250. To this end, the pack case 300 may be provided with a receiving space capable of accommodating the battery cell assembly 100, the resin layer 200, and the inorganic layer 250.

Specifically, the pack case 300 of this embodiment includes a bottom frame 305 (or pack tray) that accommodates the lower end portion of the battery cell 110. And, a cover frame (not shown) covering the upper end portion of the battery cell 110 may be further included.

The bottom frame 305 may support the battery cell assembly 100. To this end, the bottom frame 305 may have a predetermined area capable of supporting the battery cell assembly 100. In addition, a groove 305a may be formed so that the lower end portion of the battery cell 110 may be inserted. By putting the battery cells 110 directly in the bottom frame 305, the frame is minimized, which increases spatial efficiency and is advantageous for improving energy density. It is possible to implement a cell-to-pack structure.

Referring to FIG. 3, the adhesive 400 is provided at a predetermined height within the pack case 300 and is filled at a partial height in the groove 305a. The adhesive 400 fixes the battery cell 110 inserted into the groove 305a more firmly. The adhesive 400 may at least partially cover the lower end portion of the battery cell assembly 100.

Hereinafter, a manufacturing method of this battery pack 10 will be described in more detail.

A manufacturer or the like may accommodate the battery cells 110 in the pack case 300. For example, the battery cell assembly 100 may be fixed within the pack case 300 filled with the adhesive 400. Then, the battery cells 110 may be electrically connected to each other by bonding wires 112 or the like.

As another example, the battery cells 110 may first be electrically connected outside the pack case 300, and then the battery cell assembly 100 may be accommodated in the pack case 300 filled with the adhesive 400.

As described in the previous embodiment, a composition including a base resin and an inorganic filler is filled in the space between the battery cells 110.

The composition is cured, and during curing, the base resin and the inorganic filler are forcibly phase-separated according to the density difference to form the resin layer 200 and the inorganic layer 250.

In this way, the battery pack 10 according to this embodiment implements a flame retardant and mechanical support structure by adhesive bonding through the resin layer 200, the inorganic layer 250, and the adhesive 400, and thus the process may be further simplified. By implementing an integrated adhesive bonding structure of the battery cells 110 rather than a structure in which the battery cells 110 are individually forcibly fitted into a frame or module case, the assembly process efficiency may be significantly increased and the possibility of leakage may be significantly lowered compared to the individual battery cell bonding structure.

Hereinafter, in the battery pack 10 according to this embodiment, a mechanism for ensuring safety in the event of an abnormal situation due to overheating or the like will be described in more detail.

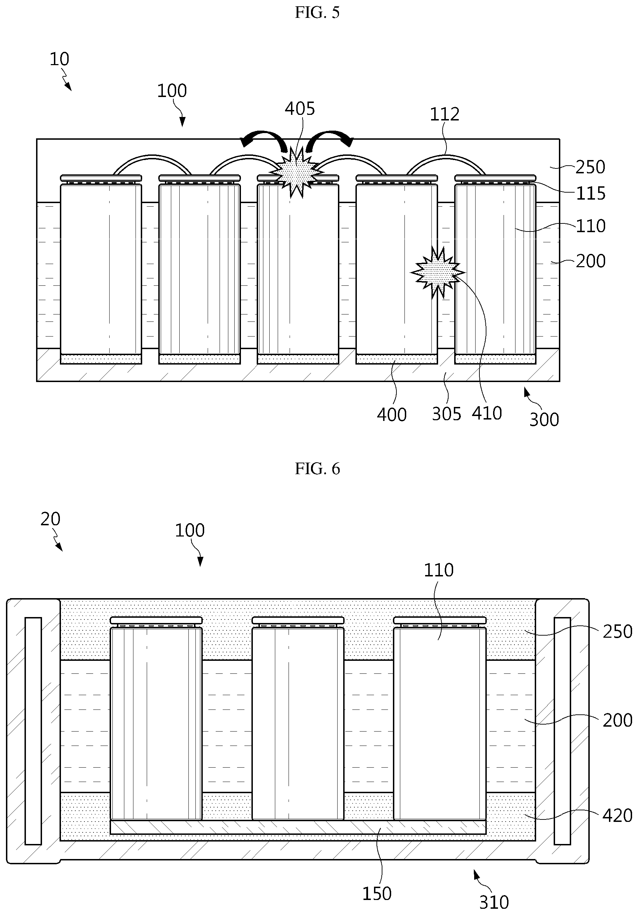

FIG. 5 is a view for describing a mechanism for ensuring safety when an abnormal situation occurs in the battery pack of FIG. 3.

Referring to FIG. 5, in the battery pack 10, an abnormal situation due to overheating or the like may occur in any one of the battery cells 110, thereby generating gas or flame. At this time, gas or flame 405 may quickly escape through the vent portion 115 of the battery cell 110 where the abnormal situation occurs.

Also, in the case of this embodiment, the inorganic layer 250 is filled surrounding the vent portion 115 of the battery cells 110, and thus the inorganic layer 250 may effectively prevent the spread of the flame 405 or the like to the battery cells 110 side adjacent to the battery cell 110 in which the vent portions 115 are open in the event of an abnormal situation. Therefore, the possibility of chain ignition is reduced.

On the other hand, since the inorganic layer 250 is basically brittle, in the event of occurrence of the flame 405 or the like, the flame 405 or the like may escape out of the battery pack 10 more quickly before being propagated to the adjacent battery cells 110 side around the battery cell 110 in which the abnormal situation occurred.

Therefore, the battery pack 10 according to this embodiment may further secure the safety of the battery pack 10 by preventing explosions such as thermal runaway through chain ignition when an abnormal situation occurs.

In addition, when an abnormal situation 410 occurs on the side of the battery cells 110, the resin layer 200 located on the side may suppress the side rupture.

FIG. 6 is a view for describing a battery pack according to another embodiment of the present disclosure.

Referring to FIG. 6, a battery pack 20 may include a battery cell assembly 100, a resin layer 200, an inorganic layer 250, a pack case 310, and an adhesive 420. Since the battery pack 20 according to this embodiment is similar to the battery pack 10 of the previous embodiment, redundant description of configurations that are substantially the same as or similar to the previous embodiment will be omitted, and differences from the previous embodiment will be mainly described hereinafter.

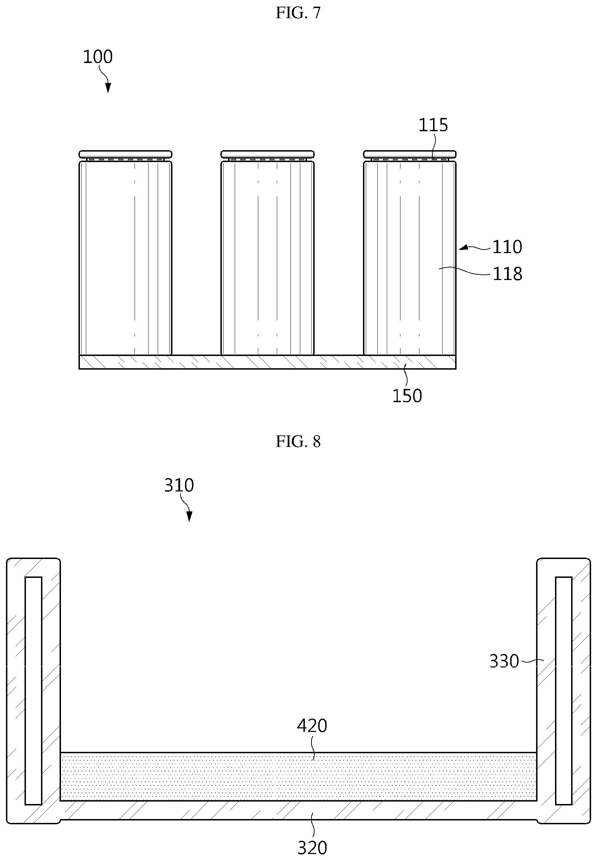

FIG. 7 is a view for describing a battery cell assembly of the battery pack of FIG. 6.

The battery cell assembly 100 may include a plurality of battery cells 110 and a busbar assembly 150.

The battery cell assembly 100 may include a first case (not shown) that supports one side, such as an upper side, of the battery cells 110. The battery cell assembly 100 may also include a second case (not shown) that supports the other side, such as a lower side, of the battery cells 110. The first case and the second case may not be included.

When the first case and the second case are included, they may be made of a plastic material. When the first case and the second case are included, they may be coupled to the pack case 310. For example, they may be coupled by adhesive bonding using an adhesive or the like to simplify the assembly process.

The busbar assembly 150 may be electrically connected to the battery cells 110. This busbar assembly 150 may be connected to the battery cells 110 by laser welding or wire bonding. The busbar assembly 150 may be electrically connected to the battery cells 110 on the upper or lower side of the battery cell assembly 100. In this embodiment, an example of connection on the lower side of the battery cell assembly 100 is shown.

The pack case 310 may accommodate the battery cell assembly 100, the resin layer 200, and the inorganic layer 250. To this end, the pack case 310 may be provided with a receiving space capable of accommodating the battery cell assembly 100, the resin layer 200, and the inorganic layer 250.

FIG. 8 is a view for describing the pack case of FIG. 6.

Referring to FIG. 8, the pack case 310 may include a base case 320 and a cross beam 330.

The base case 320 may support the battery cell assembly 100. To this end, the base case 320 may have a predetermined area capable of supporting the battery cell assembly 100.

The cross beam 330 is provided on both sides of the base case 320 and may be coupled to the upper end portion of the battery cell assembly 100. For example, if the first case is included, the cross beam 330 may be coupled to both ends of the first case.

The cross beam 330 may absorb or buffer external impact applied from the outside of the pack case 310 to prevent impact transmission to the battery cells 110 inside the pack case 310.

Referring to FIG. 6 again, the adhesive 420 is provided at a predetermined height within the pack case 310 and may at least partially cover the lower end portion of the battery cell assembly 100.

Specifically, the adhesive 420 may be provided to be filled in the inner surface of the base case 320 to a predetermined height. The lower portions of the battery cells 110 of the battery cell assembly 100 and the busbar assembly 150 may be submerged within the adhesive 420.

In this embodiment, the battery cell assembly 100 may be fixed within the pack case 310 through the adhesive 420, and the use of a waterproof adhesive as the adhesive 420 may further simplify the waterproofing process and improve waterproofing reliability while reducing manufacturing costs.

Hereinafter, a manufacturing method of this battery pack 20 will be described in more detail.

A manufacturer or the like may first manufacture the battery cell assembly 100 by arranging the battery cells 110 and then coupling the busbar assembly 150. For example, the busbar assembly 150 and the battery cells 110 may be electrically connected to each other by laser welding or wire bonding.

Then, the battery cell assembly 100 may be fixed within the pack case 310 filled with the adhesive 420 to accommodate the battery cells 110 within the pack case 310.

As described in the previous embodiment, a composition including a base resin and an inorganic filler is filled in the space between the battery cells 110, and during curing, the base resin and the inorganic filler are forcibly phase-separated according to the density difference to form a resin layer 200 and an inorganic layer 250.

As such, the battery pack 20 according to this embodiment implements a waterproof, flame retardant, and mechanical support structure by adhesive bonding through the resin layer 200, the inorganic layer 250, and the adhesive 420, and thus the process may be further simplified.

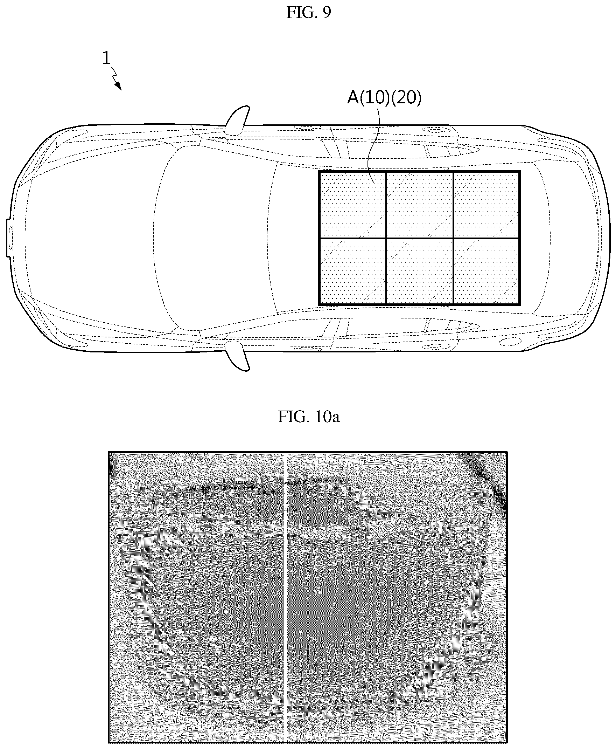

FIG. 9 is a view for describing a vehicle according to an embodiment of the present disclosure.

Referring to FIG. 9, a vehicle 1 is an electric vehicle or a hybrid vehicle, which may include at least one battery pack A, 10, 20 of the previous embodiments as an energy source. Since the vehicle 1 according to this embodiment includes the battery packs A, 10, 20, it may include all the advantages of the battery packs A, 10, 20.

According to the various embodiments described above, a battery pack A, 10, 20 that reduces the possibility of chain ignition and the degradation of space efficiency and a vehicle 1 including the same may be provided.

Hereinafter, the present disclosure will be described in more detail by describing experimental examples.

The possibility of phase separation and flame retardancy were checked according to the viscosity of the base resin. Experiments were conducted with a base resin having an initial curing time of 30 minutes or more, which is sufficient for phase separation to occur.

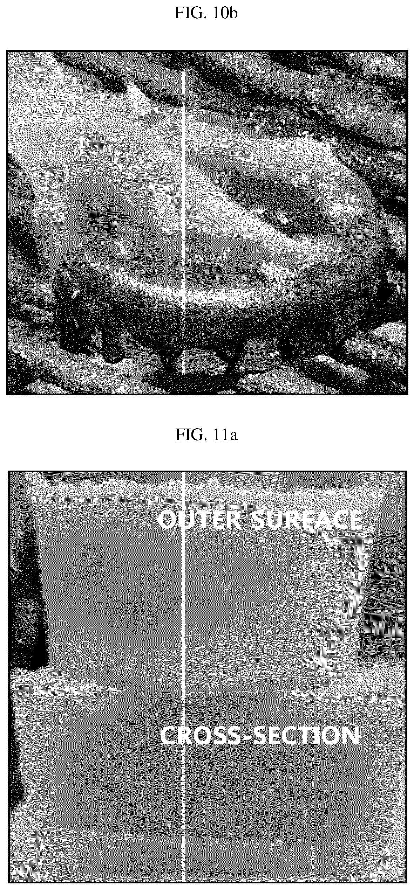

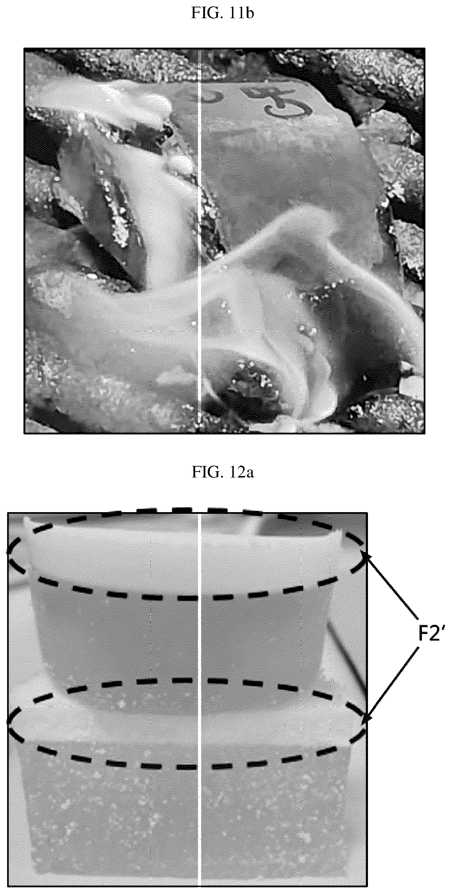

FIG. 10a is a photograph of the state after curing of Comparative Example 1, and FIG. 10b is a photograph of the flame retardancy test of Comparative Example 1. FIG. 11a is a photograph of the state after curing of Comparative Example 2, and FIG. 11b is a photograph of the flame retardancy test of Comparative Example 2.

In Comparative Example 1 and Comparative Example 2, an epoxy resin with an initial viscosity of 2000 cp was used as a base resin.

In Comparative Example 1, only the base resin was cured without a low-density filler. As shown in FIG. 10a, this results in a sample composed of a resin layer only. Referring to FIG. 10b, it can be confirmed that the flame of this sample is maintained without being extinguished during the flame retardancy test. It is difficult to expect flame retardancy from the base resin alone.

In Comparative Example 2, the base resin was mixed with 10% hollow glass beads and then cured. Referring to FIG. 11a, it can be confirmed that no phase separation has occurred on the outer surface or cross-section of the sample. As shown in FIG. 11b, the flame of this sample was maintained without being extinguished during the flame retardancy test. Therefore, it can be seen that the lack of phase separation may not secure appropriate flame retardancy even if hollow glass beads are included. The reason why phase separation was not performed is that the initial viscosity of the base resin was high.

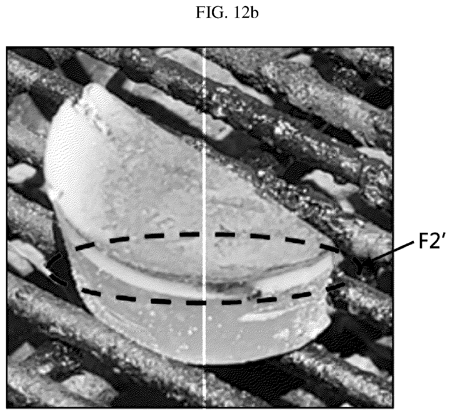

FIG. 12a is a photograph of the state after curing of the Example, and FIG. 12b is a photograph of the flame retardancy test of the Example.

In the Example, an epoxy resin with an initial viscosity of 1000 mPas (cP) was used as a base resin, which was mixed with 10% hollow glass beads and then cured. Referring to FIG. 12a, it can be confirmed that complete phase separation occurs on the outer surface and cross-section of the sample. A layer F2' of hollow glass beads collected by phase separation on the upper layer can be confirmed. In addition, it can be confirmed that the layer F2' of hollow glass beads has continuity in the vertical and horizontal directions of the sample and may be called an inorganic layer. As a result of heating the phase-separated portion, that is, the layer F2' of hollow glass beads, with a torch, the fire was extinguished within 10 seconds after the end of heating, as shown in FIG. 12b. It can be seen that sufficient flame retardancy is secured.

When an inorganic filler was mixed with a base resin having a specific initial viscosity of 1000 mPas (cP) or less and an initial curing time of 30 minutes or more, it was confirmed that the mixture was separated by density difference before curing (phase separation). When mixing 10% or more of the inorganic filler, the upper inorganic layer may be formed thicker due to phase separation, which is advantageous in securing flame retardancy. The content of the inorganic filler in the composition may vary depending on the battery pack structure, and the higher the content of the inorganic filler, the more advantageous for securing flame retardancy and price competitiveness. At the current laboratory level, it has been confirmed that flame retardancy may be secured even at the level of 10% inorganic filler.

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims.

### [Explanation of Reference Signs]

| | | | |
|---|---|---|---|
| A, 10, 20: | battery pack | A1, 300, 310: | pack case |
| B: | battery module | C: | battery cell |
| D, 200: | resin layer | E, 250: | inorganic layer |
| F: | composition | F1: | base resin |
| F2: | inorganic filler | F2': | layer of hollow glass beads |
| 1: | vehicle | 100: | battery cell assembly |
| 115: | vent portion | 150: | busbar assembly |
| 305: | bottom frame | 320: | base case |
| 330: | cross beam | 400, 420: | adhesive |

## Claims

1. A battery pack (A, 10, 20), comprising:
a pack case (A1 300, 310);
a battery cell (C) assembly comprising a plurality of battery cells (C) accommodated in the pack case (A1 300, 310);
a resin layer (D, 200) filling a relatively lower portion of the space between the plurality of battery cells (C), the relatively lower portion being a side closer to a bottom of the pack case (A1, 300,310); and
an inorganic layer (E, 250) filling a relatively upper portion of the space between the plurality of battery cells and **characterized in that**
the resin layer (D, 200) and the inorganic layer (E, 250) are a double layer formed by forced phase separation as the composition comprising the base resin (F1) and the inorganic filler (F2) is cured.

2. The battery pack (10, 20) according to claim 1, wherein the inorganic layer (E, 250) has flame retardancy compared to the resin layer (D, 200).

3. The battery pack (10, 20) according to claim 1, wherein the battery cell (C) is a cylindrical battery cell (C), the battery cells (C) are accommodated upright in the pack case (A1, 300, 310), and the resin layer (D, 200) and the inorganic layer (E, 250) surround the side surface of the battery cells (C).

4. The battery pack (10, 20) according to claim 1, wherein the inorganic filler (F2) has a low density compared to the base resin (F1).

5. The battery pack (10, 20) according to claim 1, wherein the inorganic filler (F2) is a hollow glass bead.

6. The battery pack (10, 20) according to claim 1, wherein the initial viscosity of the base resin (F1) is 1000 mPas (cP) or less.

7. The battery pack (10, 20) according to claim 1, wherein the content of the inorganic filler (F2) in the composition is 10% or more.

8. The battery pack (10, 20) according to claim 1, wherein the base resin (F1) has a Shore hardness A of 80 or more and a Shore hardness D of 30 or more after curing.

9. The battery pack (10, 20) according to claim 1, wherein the base resin (F1) has an initial curing time of 30 minutes or more.

10. The battery pack (10, 20) according to claim 1, further comprising an adhesive (400, 420) between the inner surface of the pack case A1 300, 310) and the battery cell (C).

11. The battery pack (10, 20) according to claim 1, wherein the battery cell (C) comprises a vent portion (115) at the top or bottom thereof, and the inorganic layer (E, 250) surrounds the vent portion (115).

12. A manufacturing method of a battery pack (10, 20), comprising the following steps of:
accommodating a plurality of battery cells (C) in a pack case A1, 300, 310);
filling the space between the plurality of battery cells (C) with a composition comprising a base resin (F1) and an inorganic filler (F2); and
forming a resin layer (D, 200) filling a relatively lower portion of the space between the plurality of battery cells (C) and an inorganic layer (E, 250) filling a relatively upper portion of the space between the plurality of battery cells (C) by curing the composition, and by forced phase separation of the base resin (F1) and the inorganic filler (F2) according to the density difference during curing.

13. The manufacturing method of a battery pack (10, 20) according to claim 12, wherein the initial viscosity of the base resin (F1) is 1000 mPas (cP) or less.

14. The manufacturing method of a battery pack (10, 20) according to claim 12, wherein the base resin (F1) has an initial curing time of 30 minutes or more.

## Patentansprüche

1. Batteriepack (A, 10, 20), umfassend:
ein Packgehäuse (A1, 300, 310);
eine Batteriezellen- (C) -Anordnung, welche eine Mehrzahl von Batteriezellen (C) umfasst, welche in dem Packgehäuse (A1, 300, 310) aufgenommen sind;
eine Harzschicht (D, 200), welche einen relativ unteren Abschnitt des Raums zwischen der Mehrzahl von Batteriezellen (C) füllt, wobei der relativ untere Abschnitt eine Seite ist, welche sich näher an einer Unterseite des Packgehäuses (A1, 300, 310) befindet; und
eine anorganische Schicht (E, 250), welche einen relativ oberen Abschnitt des Raums zwischen der Mehrzahl von Batteriezellen füllt, und **dadurch gekennzeichnet, dass**
die Harzschicht (D, 200) und die anorganische Schicht (E, 250) eine Doppelschicht sind, welche durch eine erzwungene Phasentrennung gebildet wird, wenn die Zusammensetzung, welche das Basisharz (F1) und den anorganischen Füllstoff (F2) umfasst, ausgehärtet wird.

2. Batteriepack (10, 20) nach Anspruch 1, wobei die anorganische Schicht (E, 250) im Vergleich zu der Harzschicht (D, 200) eine Flammhemmung aufweist.

3. Batteriepack (10, 20) nach Anspruch 1, wobei die Batteriezelle (C) eine zylindrische Batteriezelle (C) ist, die Batteriezellen (C) aufrecht in dem Packgehäuse (A1, 300, 310) aufgenommen sind und die Harzschicht (D, 200) und die anorganische Schicht (E, 250) die Seitenfläche der Batteriezellen (C) umgeben.

4. Batteriepack (10, 20) nach Anspruch 1, wobei der anorganische Füllstoff (F2) im Vergleich zu dem Basisharz (F1) eine geringe Dichte aufweist.

5. Batteriepack (10, 20) nach Anspruch 1, wobei der anorganische Füllstoff (F2) eine hohle Glasperle ist.

6. Batteriepack (10, 20) nach Anspruch 1, wobei die anfängliche Viskosität des Basisharzes (F1) 1000 mPas (cp) oder weniger beträgt.

7. Batteriepack (10, 20) nach Anspruch 1, wobei der Gehalt des anorganischen Füllstoffs (F2) in der Zusammensetzung 10 % oder mehr beträgt.

8. Batteriepack (10, 20) nach Anspruch 1, wobei das Basisharz (F1) nach einem Aushärten eine Shore-Härte A von 80 oder mehr und eine Shore-Härte D von 30 oder mehr aufweist.

9. Batteriepack (10, 20) nach Anspruch 1, wobei das Basisharz (F1) eine anfängliche Aushärtungszeit von 30 Minuten oder mehr aufweist.

10. Batteriepack (10, 20) nach Anspruch 1, ferner umfassend einen Klebstoff (400, 420) zwischen der inneren Fläche des Packgehäuses (A1, 300, 310) und der Batteriezelle (C).

11. Batteriepack (10, 20) nach Anspruch 1, wobei die Batteriezelle (C) an der Oberseite oder der Unterseite davon einen Entlüftungsabschnitt (115) umfasst und die anorganische Schicht (E, 250) den Entlüftungsabschnitt (115) umgibt.

12. Herstellungsverfahren für einen Batteriepack (10, 20), umfassend die folgenden Schritte:
Aufnehmen einer Mehrzahl von Batteriezellen (C) in einem Packgehäuse (A1, 300, 310);
Füllen des Raums zwischen der Mehrzahl von Batteriezellen (C) mit einer Zusammensetzung, welche ein Basisharz (F1) und einen anorganischen Füllstoff (F2) umfasst; und
Bilden einer Harzschicht (D, 200), welche einen relativ unteren Abschnitt des Raums zwischen der Mehrzahl von Batteriezellen (C) füllt, und einer anorganischen Schicht (E, 250), welche einen relativ oberen Abschnitt des Raums zwischen der Mehrzahl von Batteriezellen (C) füllt, durch ein Aushärten der Zusammensetzung und durch eine erzwungene Phasentrennung des Basisharzes (F1) und des anorganischen Füllstoffs (F2) gemäß dem Dichteunterschied während des Aushärtens.

13. Herstellungsverfahren für einen Batteriepack (10, 20) nach Anspruch 12, wobei die anfängliche Viskosität des Basisharzes (F1) 1000 mPas (cp) oder weniger beträgt.

14. Herstellungsverfahren für einen Batteriepack (10, 20) nach Anspruch 12, wobei das Basisharz (F1) eine anfängliche Aushärtungszeit von 30 Minuten oder mehr aufweist.

## Revendications

1. Bloc-batterie (A, 10, 20), comprenant :
un boîtier de bloc (A1, 300, 310) ;
un ensemble d'éléments de batterie (C) comprenant une pluralité d'éléments de batterie (C) logés dans le boîtier de bloc (A1, 300, 310) ;
une couche de résine (D, 200) remplissant une partie relativement inférieure de l'espace entre la pluralité d'éléments de batterie (C), la partie relativement inférieure étant un côté plus proche d'un fond du boîtier de bloc (A1, 300, 310) ; et
une couche inorganique (E, 250) remplissant une partie relativement supérieure de l'espace entre la pluralité d'éléments de batterie et **caractérisé en ce que** la couche de résine (D, 200) et la couche inorganique (E, 250) sont une double couche formée par séparation de phase forcée à mesure que la composition comprenant la résine de base (F1) et la charge inorganique (F2) est durcie.

2. Bloc-batterie (10, 20) selon la revendication 1, dans lequel la couche inorganique (E, 250) possède une ignifugation comparativement à la couche de résine (D, 200).

3. Bloc-batterie (10, 20) selon la revendication 1, dans lequel l'élément de batterie (C) est un élément de batterie (C) cylindrique, les éléments de batterie (C) sont logés verticalement dans le boîtier de bloc (A1, 300, 310), et la couche de résine (D, 200) et la couche inorganique (E, 250) encerclent la surface latérale des éléments de batterie (C).

4. Bloc-batterie (10, 20) selon la revendication 1, dans lequel la charge inorganique (F2) possède une faible densité comparativement à la résine de base (F1).

5. Bloc-batterie (10, 20) selon la revendication 1, dans lequel la charge inorganique (F2) est une bille de verre creuse.

6. Bloc-batterie (10, 20) selon la revendication 1, dans lequel la viscosité initiale de la résine de base (F1) est de 1000 mPas (cP) ou moins.

7. Bloc-batterie (10, 20) selon la revendication 1, dans lequel la teneur de la charge inorganique (F2) dans la composition est de 10 % ou plus.

8. Bloc-batterie (10, 20) selon la revendication 1, dans lequel la résine de base (F1) possède une dureté Shore A de 80 ou plus et une dureté Shore D de 30 ou plus après durcissement.

9. Bloc-batterie (10, 20) selon la revendication 1, dans lequel la résine de base (F1) possède un temps de durcissement initial de 30 minutes ou plus.

10. Bloc-batterie (10, 20) selon la revendication 1, comprenant en outre un adhésif (400, 420) entre la surface interne du boîtier de bloc (A1 300, 310) et l'élément de batterie (C).

11. Bloc-batterie (10, 20) selon la revendication 1, dans lequel l'élément de batterie (C) comprend une partie évent (115) sur le dessus ou le dessous de celle-ci, et la couche inorganique (E, 250) encercle la partie évent (115).

12. Procédé de fabrication d'un bloc-batterie (10, 20), comprenant les étapes suivantes de :
logement d'une pluralité d'éléments de batterie (C) dans un boîtier de bloc (A1, 300, 310) ;
remplissage de l'espace entre la pluralité d'éléments de batterie (C) avec une composition comprenant une résine de base (F1) et une charge inorganique (F2) ; et formation d'une couche de résine (D, 200) remplissant une partie relativement inférieure de l'espace entre la pluralité d'éléments de batterie (C) et d'une couche inorganique (E, 250) remplissant une partie relativement supérieure de l'espace entre la pluralité d'éléments de batterie (C) par le durcissement de la composition, et par séparation de phase forcée de la résine de base (F1) et de la charge inorganique (F2) selon la différence de densité pendant le durcissement.

13. Procédé de fabrication d'un bloc-batterie (10, 20) selon la revendication 12, dans lequel la viscosité initiale de la résine de base (F1) est de 1000 mPas (cP) ou moins.

14. Procédé de fabrication d'un bloc-batterie (10, 20) selon la revendication 12, dans lequel la résine de base (F1) possède un temps de durcissement initial de 30 minutes ou plus.
